# EUROPEAN PATENT APPLICATION

(11) **EP 2 295 155 A1**
(43) Date of publication of application: **16.03.2011**
(21) Application number: 09425345.7
(22) Date of filing: 09.09.2009
(51) Int. Cl.: B07C 3/06, B07C 3/08, B65G 17/34, B65G 47/96

(54) **Vertical sorting machine for objects, in particular mail**

(71) Applicant: ELSAG DATAMAT S.p.A., Genova (IT)
(72) Inventor: Del Canto, Maurizio, 16154 Genova (IT)
(74) Representative: Bongiovanni, Simone

(57) **Abstract**

A vertical sorting machine for objects, in particular mail, having a conveying and sorting system (2) which receives at least one stream (3) of objects (7), and has a number of selectable outlets (9) to accumulating stations (10) to which the objects (7) are fed. The conveying and sorting system (2) has a number of contiguous portions along which the objects (7) are conveyed, and which include : a bottom horizontal conveying portion (11) communicating with a first number of outlets (9a) to bottom accumulating stations; an upward vertical conveying portion (12); a top horizontal conveying portion (13) communicating with a second number of outlets (9b) to top accumulating stations; and a downward vertical conveying portion (14). The conveying and sorting system (2) is designed to unload the objects crosswise to the travelling direction (D) of the objects, to feed the objects to the various outlets (9a, 9b) to the accumulating stations (10).

## Description

The present invention relates to a vertical sorting machine, in particular for mail.

Sorting machines for objects such as mail (letters, postcards, enveloped documents, wrapped magazines, packets, parcels, large envelopes, packs of letters and printed matter, delivery containers of various types, etc.) are known comprising a number of trolleys into which the objects are loaded, and which travel along an endless path and interact with loading stations where the objects are loaded onto the trolley bed, and unloading stations where the objects are fed to outlets and unloaded off the trolley.

Patent Application WO 01/10574 of United Parcel Service of America INC, for example, employs trolleys which are moved, under the control of a programmable processing unit, along a horizontal path between loading and unloading stations, and each of which comprises a tip-up bed onto which the mail is loaded.

Horizontally-extending machines of this sort are extremely bulky and call for considerable floor space.

It is an object of the present invention to provide a sorting machine for objects, in particular mail, that is compact enough even for small premises.

It is a further object of the present invention to provide a machine featuring a large number of outlets in relation to the length of the path.

According to the present invention, there is provided a vertical sorting machine for objects, in particular mail, comprising a conveying and sorting system which receives at least one stream of objects, and has a number of selectable outlets to accumulating stations to which the objects are fed; the conveying and sorting system **being characterized by comprising** a number of contiguous portions along which the objects are conveyed, and which include : a bottom horizontal conveying portion communicating with a first number of outlets of bottom accumulating stations; an upward vertical conveying portion; a top horizontal conveying portion communicating with a second number of outlets of top accumulating stations; and a downward vertical conveying portion; the conveying and sorting system being designed to unload the objects crosswise to the travelling direction of the objects, to feed the objects to the various outlets to the accumulating stations.

A preferred, non-limiting embodiment of the invention will be described by way of example with reference to the accompanying drawings, in which:
Figure 1 shows a simplified block diagram of a sorting machine in accordance with the teachings of the present invention;
Figure 2 shows a simplified block diagram of the conveying and sorting system of the sorting machine according to the present invention;
Figure 3 shows a schematic front view, with parts removed for clarity, of the mechanical structure of the Figure 2 system;
Figure 4 shows a schematic front view, with parts removed for clarity, of the structure of a conveying and sorting system trolley;
Figure 5 shows a schematic view in perspective, with parts removed for clarity, of the structure of a conveying and sorting system trolley;
Figure 6 shows a view in perspective of a portion of the sorting machine according to the present invention;
Figure 7 shows a variation of the Figure 4 and 5 trolley.

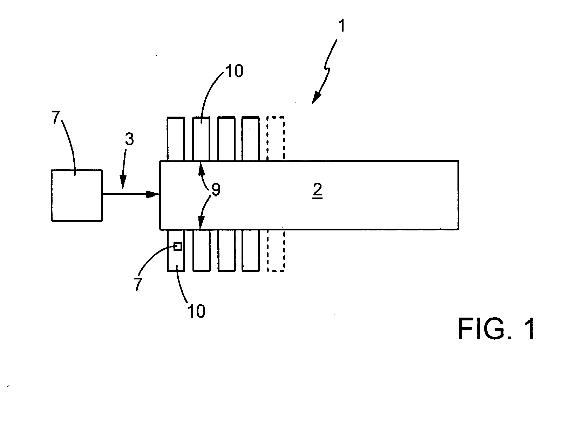

Number 1 in Figure 1 indicates schematically a vertical sorting machine for objects, in particular mail, in accordance with the teachings of the present invention.

Machine 1 comprises a conveying and sorting system 2 which receives a stream 3 of objects 7 (in particular, rectangular-based mail items : letters, postcards, enveloped documents, wrapped magazines, packets, parcels, large envelopes, packs of letters and printed matter, delivery containers of various types, etc.).

Machine 1 is also designed to sort other types of objects, such as manufactured goods, e.g. folded items of clothing or audio/video items.

Conveying and sorting system 2 comprises a number of selectable outlets 9 (described in detail below) communicating with respective accumulating stations 10 to which the sorted objects 7 are fed. Outlets 9 are selected by known selecting devices (not shown) controlled by known sorting and/or sequencing programs employing information assigned to each object 7 in the form of a code.

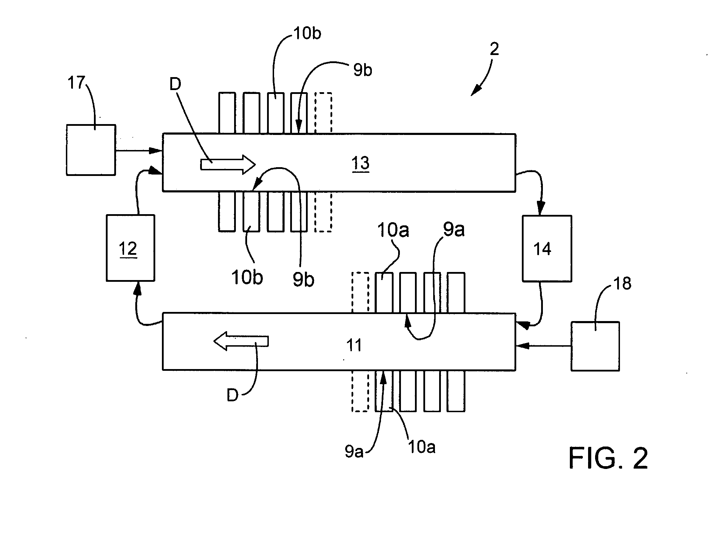

Figure 2 shows conveying and sorting system 2 in more detail.

Conveying and sorting system 2 comprises a number of contiguous portions along which objects 7 are conveyed :
- a straight bottom horizontal conveying portion 11 communicating with a first number of outlets 9a to bottom accumulating stations 10a;
- an upward vertical conveying portion 12;
- a straight top horizontal conveying portion 13 communicating with a second number of outlets 9b to top accumulating stations 10b; and
- a downward vertical conveying portion 14.

Objects 7 may, for example, be fed to conveying and sorting system 2 by a known singling device 17, which receives a number of objects arranged in a pack, and supplies single (i.e. physically separate) objects to top horizontal conveying portion 13.

Alternatively or in addition to the above, conveying and sorting system 2 may be supplied with objects by a known singling device 18, which receives a number of objects arranged in a pack, and supplies single objects to bottom horizontal conveying portion 11.

Top accumulating stations 10b are located on opposite sides of the straight travelling direction D of the objects along straight top horizontal conveying portion 13, and conveying and sorting system 2 is designed to unload the objects crosswise to straight travelling direction D into outlets 9b of top accumulating stations 10b.

Likewise, bottom accumulating stations 10a are located on opposite sides of the straight travelling direction D of the objects along bottom horizontal conveying portion 11, and conveying and sorting system 2 is designed to feed the objects crosswise to travelling direction D into outlets 9a of bottom accumulating stations 10a.

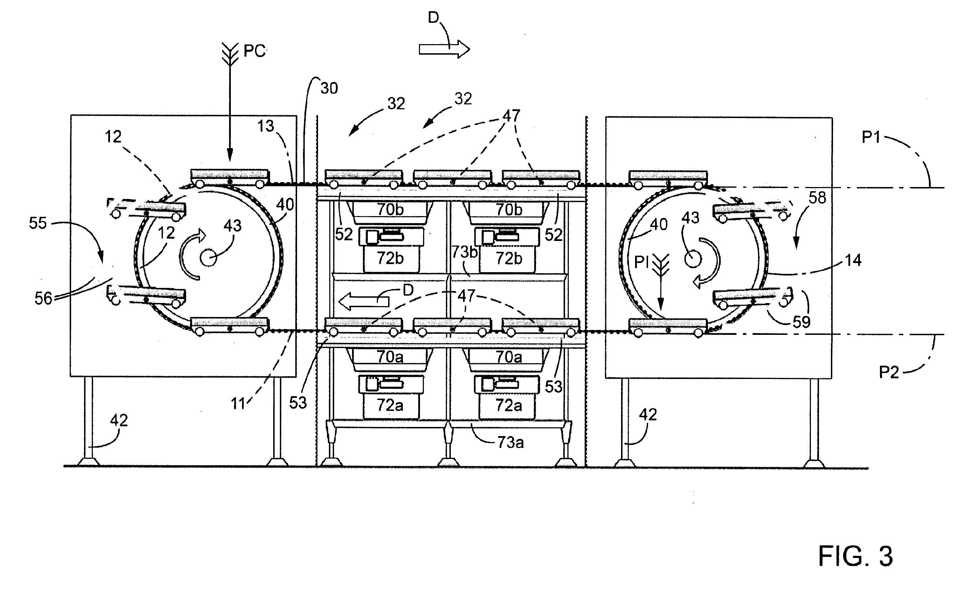

As explained below, stations 10a and 10b lie in different planes : stations 10b in a plane P1 (Figure 3), and stations 10a in a lower plane P2.

Figure 3 shows the mechanical parts of conveying and sorting system 2.

Conveying and sorting system 2 comprises :
- two belt or chain elements 30 (indicated in Figure 3 and lying in parallel vertical planes) which are moved along two endless paths by drive means (not shown); and
- a number of trolleys 32 interposed between and supported by the two belt/chain elements 30 and spaced apart lengthwise in the travelling direction D of belt/chain elements 30 along planes P1 and P2.

Singling device 17 feeds objects 7 singly into trolleys 32 in a top loading position PC (shown by an arrow), and singling device 18 feeds objects 7 singly into trolleys 32 in a bottom loading position PI (shown by an arrow).

More specifically, conveying and sorting system 2 may comprise two pulleys 40 fitted to a vertical supporting structure 42 (shown schematically in part) and rotating about parallel horizontal axes 43. One of pulleys 40 is connected by a transmission (not shown) to said drive means (not shown).

Belt/chain elements 30 are fitted to pulleys 40 to form for trolleys 32 :
- straight bottom horizontal conveying portion 11 extending between bottom portions of pulleys 40;
- upward vertical conveying portion 12 extending along a curved sector along which belt/chain elements 30 wind about a first pulley 40;
- straight top horizontal conveying portion 13 extending between top portions of pulleys 40; and
- downward vertical conveying portion 14 extending along a curved sector along which belt/chain elements 30 wind about a second pulley 40.

Trolleys 32 thus move, among other things, in different parallel planes (P1, P2) along an endless path which, viewed from the front (Figure 3), is rectangular with the short sides defined by arcs of a circle.

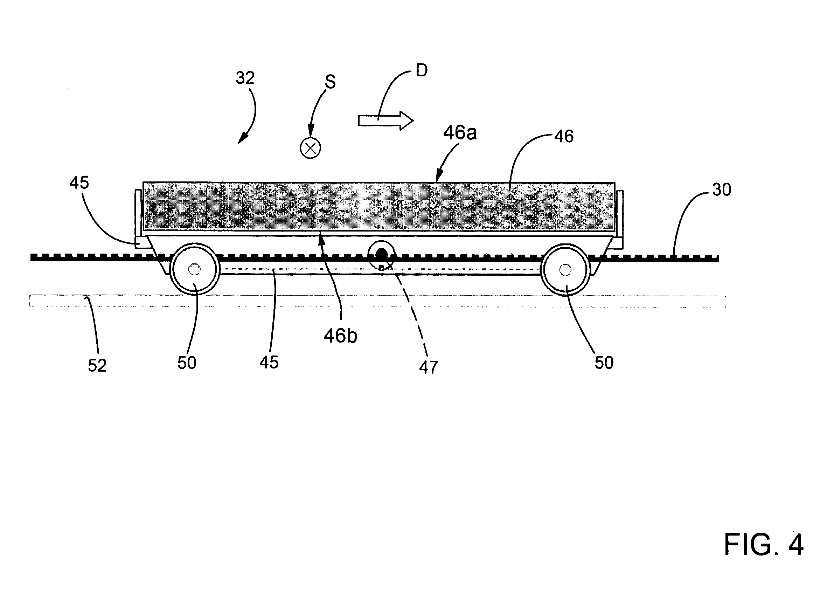

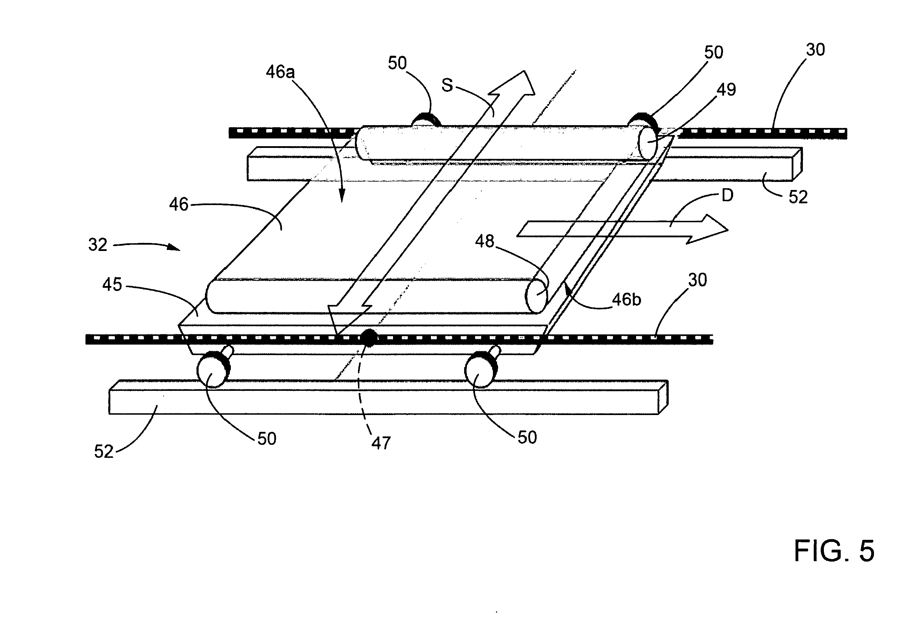

Figures 4 and 5 show a trolley 32 in detail.

Each trolley 32 comprises a rectangular plate 45 interposed between and hinged to belt/chain elements 30 to rotate about a horizontal axis of rotation 47 perpendicular to travelling direction D along planes P1 and P2.

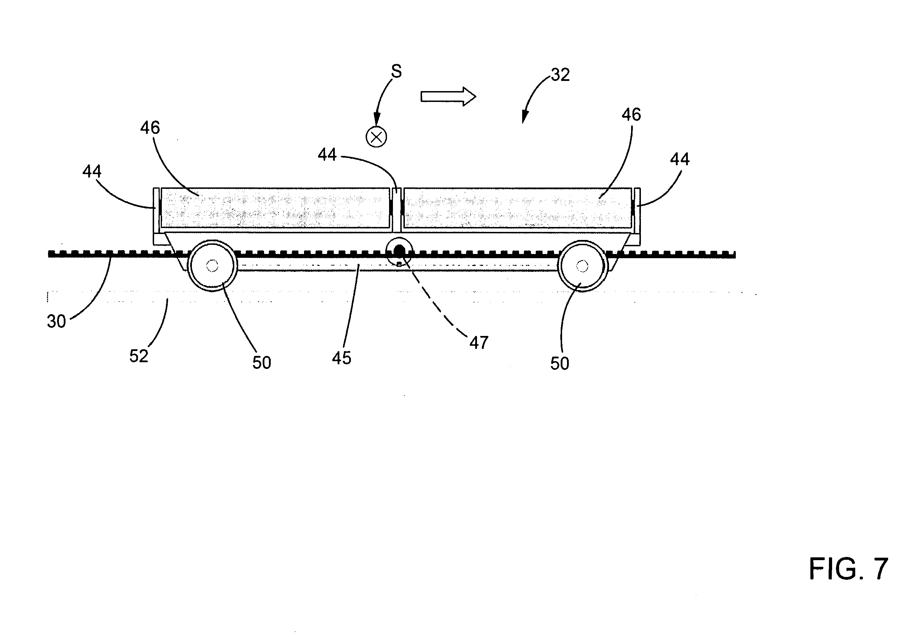

Plate 45 is fitted with one or more transportation cells (Figure 5 shows one cell, and Figure 7 two cells), each comprising a belt 46 which extends endlessly between two end rollers 48, 49 having axes close to and parallel to the sides of plate 45 parallel to direction D. Belt 46 defines a flat top supporting surface 46a facing outwards of trolley 32, and a flat bottom surface 46b facing plate 45. As explained in detail below, belt 46 is movable selectively, by second drive means (described in detail below), either way in a two-way direction S which, along flat supporting surface 46a and flat surface 46b, is perpendicular to the straight travelling direction D of trolleys 32 along straight top and bottom conveying portions 13 and 11.

The transportation cell/s is/are connected to the plate by known supports (not shown) on the two sides of plate 45 perpendicular to the sides of plate 45 hinged to belt/chain elements 30.

The second drive means powering the belts comprise known (electrically powered) drive rollers (not shown) housed inside one of end rollers 48, 49, and, when operated, rotate the roller in which they are housed, and therefore belt 46 stretched between the housing roller and the other idle end roller, to move flat top supporting surface 46a in direction S perpendicular to straight travelling direction D of the trolleys. Electric power to the drive rollers may be supplied, for example, by conductors fitted to belt/chain elements 30.

Along two lateral edges parallel to direction D, rectangular plate 45 is fitted with two idle wheels 50 projecting outwards of plate 45 and having axes of rotation perpendicular to direction D.

As trolleys 32 move along top horizontal conveying portion 13, idle wheels 50 rest on two first straight top rails 52 coplanar with each other, parallel to travelling direction D, and located on opposite sides of belt/chain elements 30 to prevent trolleys 32 from rotating about respective horizontal axes 47 and keep top supporting surface 46a horizontal and parallel to plane P1.

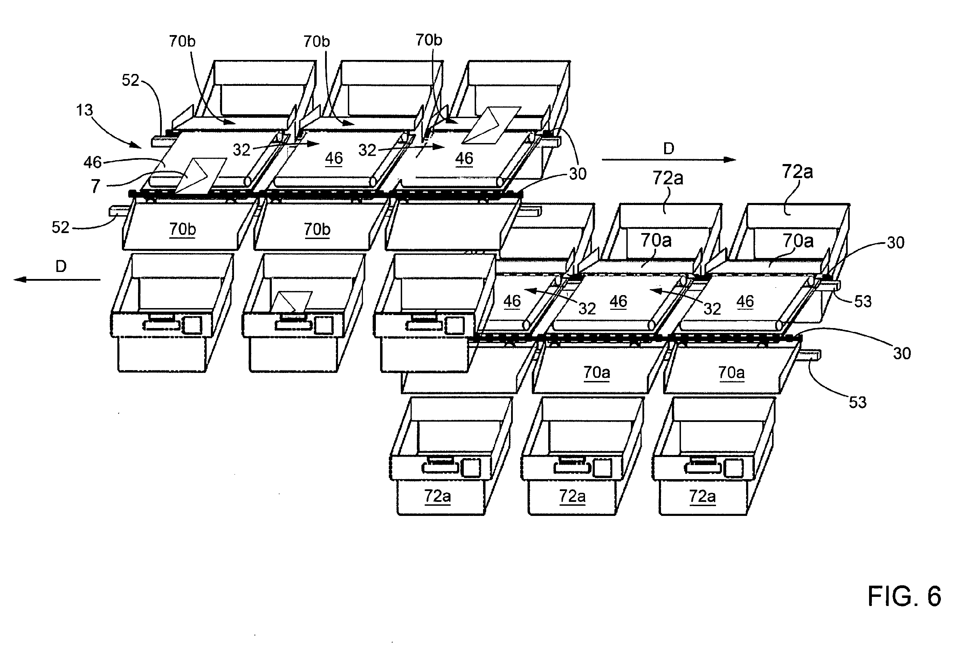

As trolleys 32 move along bottom horizontal conveying portion 11, idle wheels 50 rest on two second straight bottom rails 53 (Figures 3 and 6) coplanar with each other, parallel to travelling direction D, and located on opposite sides of belt/chain elements 30 to prevent trolleys 32 from rotating about respective horizontal axes 47 and keep top supporting surface 46a horizontal and parallel to plane P2.

Along semicircular upward vertical conveying portion 12, idle wheels 50 run inside a guide 55 (Figure 3) defined by pairs of semicircular rails 56, and rest on a pair of outer rails 56 along the first part of the semicircle, and on a pair of inner rails 56 along the second part of the semicircle.

Guide 55 is designed to maintain a constant distance between the axis of front wheels 50 and the projection of the central horizontal axis 47 of trolley 32 in the plane defined by the axis of front wheels 50 and the axis of rear wheels 50 of trolley 32, so the trolley is maintained horizontal with a tilt of γ=0° or a few degrees less (γ<0°) along the whole of semicircular upward portion 12.

Along semicircular downward vertical conveying portion 14, each of the two rear idle wheels 50 of trolley 32 runs inside a guide 58 defined by pairs of parallel semicircular rails 59, and rests on a pair of inner rails 59 along the first part of the semicircle, and on a pair of outer rails 59 along the second part of the semicircle. Guide 58 is designed to maintain a constant distance between the axis of rear wheels 50 and the projection of central horizontal axis 47 of trolley 32 in the plane defined by the axis of front wheels 50 and the axis of rear wheels 50 of trolley 32, so trolley 32 is maintained horizontal with a tilt of γ=0° or a few degrees more (γ>0°) along the whole of the semicircular downward portion.

Each top accumulating station 10b comprises a chute 70b (Figures 3 and 6) having an inlet facing top horizontal conveying portion 13, and an outlet communicating with an open-topped, parallelepiped-shaped container 72b resting on a top supporting surface 73b of a central portion of supporting structure 42. Top stations 10b being located on opposite sides of travelling direction D of the objects along straight top horizontal conveying portion 13, chutes 70b are located on opposite sides of top conveying portion 13.

Each bottom accumulating station 10a comprises a chute 70a (Figures 3 and 6) having an inlet facing bottom horizontal conveying portion 11, and an outlet communicating with an open-topped, parallelepiped-shaped container 72a resting on a bottom supporting surface 73a of a central portion of supporting structure 42. Bottom stations 10a being located on opposite sides of travelling direction D of the objects along straight bottom horizontal conveying portion 11, chutes 70a are located on opposite sides of bottom conveying portion 11.

**In actual use,** an object 7 is loaded by singling device 18 onto the top supporting surface 46a of a trolley 32 in a bottom loading position PI. The same may also be done by singling device 17. Object 7 can be loaded onto the moving trolley 32 by dropping it onto the top surface of belt 46, which can be rolled, by activating the second drive means (drive rollers), to shift object 7 from the singling device, alongside the transportation cell belt, to the centre of the top supporting surface of the belt.

Rotation of pulleys 40 then moves trolley 32 out of the loading position and further along the endless path.

When trolley 32 reaches an outlet 9a, 9b of an accumulating station 10a, 10b selected as the destination of object 7 by a sorting (e.g. mail sorting) program, the second drive means (drive rollers) are activated to produce a rapid movement of belt 46 and fire object 7 onto chute 70a, 70b of the selected outlet. Outlets 9a, 9b on a first or second side of the travelling direction are selected by adjusting the rotation direction (clockwise/anticlockwise) of the second drive means (drive rollers) to fire object 7 to a first or second side of travelling direction D. Object 7 is thus fired by belt 46 onto chute 70a, 70b, and slides down the chute into container 72a, 72b.

Compared with horizontal machines, the present invention has major advantages in terms of compactness, floor space and outlet density, and obvious advantages in terms of greater sorting capacity and the number of outlets in relation to path length.

Variations of the machine described may feature one, two or more conveyor belt cells on each trolley 32. In the case of two or more cells, these may be activated either jointly, to convey and sort large objects loaded onto the combined conveyor belts of the cells, or separately to independently convey and sort smaller objects loaded onto the belt of each cell.

Figure 7 shows a two-cell trolley.

## Claims

1. A vertical sorting machine for objects, in particular mail, comprising a conveying and sorting system (2) which receives at least one stream (3) of objects (7), and has a number of selectable outlets (9) of accumulating stations (10) to which the objects (7) are fed;
the conveying and sorting system (2) **being characterized by comprising** a number of contiguous portions along which the objects (7) are conveyed, and which include :
- a bottom horizontal conveying portion (11) communicating with a first number of outlets (9a) of bottom accumulating stations;
- an upward vertical conveying portion (12);
- a top horizontal conveying portion (13) communicating with a second number of outlets (9b) of top accumulating stations; and
- a downward vertical conveying portion (14);
the conveying and sorting system (2) being designed to unload the objects crosswise to the travelling direction (D) of the objects, to feed the objects to the various outlets (9a, 9b) to the accumulating stations (10).

2. A machine as claimed in Claim 1, wherein the top accumulating stations (10b) are located on opposite sides of the travelling direction (D) of the objects along the top horizontal conveying portion (13), and the conveying and sorting system (2) is designed to unload the objects crosswise to the travelling direction (D), to feed the objects to the various outlets (9b) to the top accumulating stations (10b).

3. A machine as claimed in Claim 1 or 2, wherein the bottom accumulating stations (10a) are located on opposite sides of the travelling direction (D) of the objects along the bottom horizontal conveying portion (11), and the conveying and sorting system (2) is designed to unload the objects crosswise to the travelling direction (D), to feed the objects to the various outlets (9a) to the bottom accumulating stations (10a).

4. A machine as claimed in any one of the foregoing Claims, wherein the conveying and sorting system (2) comprises:
- two belt or chain elements (30) moved by drive means along two endless paths; and
- a number of trolleys (32) interposed between the two belt/chain elements (30), supported by the belt/chain elements (30), and spaced apart lengthwise in the travelling direction of the belt/chain elements (30).

5. A machine as claimed in Claim 4, wherein the conveying and sorting system (2) comprises at least a first and second pulley (40) rotating about horizontal axes (43);
and the belt/chain elements (30) are fitted to the pulleys (40) to form:
- said bottom horizontal conveying portion (11) extending between bottom portions of the pulleys (40);
- said upward vertical conveying portion (12) extending along a curved sector along which the belt/chain elements (30) wind about a first pulley (40);
- said top horizontal conveying portion (13) extending between top portions of the pulleys (40); and
- said downward vertical conveying portion (14) extending along a curved sector along which the belt/chain elements (30) wind about a second pulley (40).

6. A machine as claimed in Claim 4 or 5, wherein each trolley comprises a supporting structure (45) fitted with one or more transportation cells, each comprising a belt (46) defining a flat top supporting surface (46a) facing outwards of the trolley (32) and for supporting an object (7); said belt (46) being movable by second drive means in a direction (S) perpendicular to the straight travelling direction (D) of the trolleys (32) along the straight top and bottom conveying portion (13, 11).

7. A machine as claimed in Claim 6, wherein said supporting structure (45) is hinged to said belt/chain elements (30) to rotate about a substantially horizontal axis (47).

8. A machine as claimed in Claim 6 or 7, wherein said supporting structure (45) comprises locating means, in particular idle wheels (50), which, along said top/bottom horizontal conveying portion, engage retaining means (52), e.g. rails, to prevent rotation of the trolleys and to keep said top supporting surface (46a) horizontal.

9. A machine as claimed in Claim 8, wherein, along said upward/downward vertical conveying portion, a guide (55, 58) is provided for said locating means (50), and is defined by pairs of semicircular rails (56, 59) designed to keep the trolley horizontal with a tilt of γ=0° or a few degrees less (γ<0°) along the whole of the upward/downward vertical conveying portion.

10. A machine as claimed in any one of the foregoing Claims, wherein each top accumulating station (10b) comprises a chute (70b) having an inlet facing the top horizontal conveying portion (13), and an outlet communicating with an open-topped container (72b); the chutes (70b) being located on opposite sides of the top horizontal conveying portion (13).

11. A machine as claimed in any one of the foregoing Claims, wherein each bottom accumulating station (10a) comprises a chute (70a) having an inlet facing the bottom horizontal conveying portion (11), and an outlet communicating with an open-topped container (72a); the chutes (70a) being located on opposite sides of the bottom horizontal conveying portion (11).
